# EUROPEAN PATENT APPLICATION

(11) **EP 4 529 815 A1**
(43) Date of publication of application: **02.04.2025**
(21) Application number: 24202869.4
(22) Date of filing: 26.09.2024
(51) Int. Cl.: A47J 31/36, A47J 31/44

(54) **A COFFEE EXTRACTION COMPONENT**

(30) Priority: 28.09.2023 CN 202322666759 U
(71) Applicant: Foshan Shunde Relang Electronic Technology Co., Ltd., Foshan Guangdong 528000 (CN); Autech Technology Co., Ltd., Foshan Guangdong 528000 (CN)
(72) Inventor: CAI, Jianbin, Foshan 528000 (CN)
(74) Representative: Wang, Bo

(57) **Abstract**

The present invention relates to a coffee extraction component comprising a base in which an extraction tank is provided, and an upper cover that is disposed at the top of the base, the base bottom is provided with a water outlet, the upper cover is provided with top needle and water inlet, the upper end of top needle is connected to the water inlet, the conical lower end of top needle extends into the extraction tank, the top needle slides up and down in the water inlet, and a plurality of water inlets are disposed at circular intervals at the inclined surface of top needle tip. The hot water of present invention enters coffee capsules from a plurality of water inlets of the top needle, and extracts coffee powder from coffee capsules from multiple directions, providing good extraction effect, uniform hot water flow, rich and fatty coffee aroma, and good flavor.

## Description

### Technical Field

The present invention relates to the technical field of coffee machines, particularly to a coffee extraction component.

### Background

To brew Italian espresso, coffee has to be extracted with water at a high temperature of about 96 degrees Celsius under high pressure of 9-15 bars. The coffee brewed in this way is called espresso, and some of the oil in the coffee is also extracted, so a rich layer of oil appears on the surface of espresso. However, in existing Italian espresso machines, after coffee capsules are installed, the top needle punctures the coffee capsule, hot water enters the capsule from the tip of top needle, but the tip of top needle has a slanted surface, the hot water flowing out from the tip only flows towards the side facing the slanted surface to extract the coffee powder. and the coffee powder facing away from the slanted surface is rarely extracted by the hot water, so that the Italian espresso machine has poor extraction efficiency, and the uneven hot water flow results in less coffee aroma and oil, and poor taste. Therefore, further improvement has to be made to the structure of existing coffee machines.

### Summary

The purpose of the present invention is to provide a coffee extraction component with good extraction efficiency.

The purpose of the present invention is achieved as follows:
A coffee extraction component, comprising a base in which an extraction tank is provided, and an upper cover that is disposed at the top of the base, the base bottom is provided with a water outlet, the upper cover is provided with top needle and water inlet, the upper end of top needle is connected to the water inlet, the conical lower end of top needle extends into the extraction tank, the top needle slides up and down in the water inlet, and a plurality of water inlets are disposed at circular intervals at the inclined surface of top needle tip. The hot water of present invention enters coffee capsules from a plurality of water inlets of the top needle, and extracts coffee powder from coffee capsules from multiple directions, providing good extraction effect, uniform hot water flow, rich and fatty coffee aroma, and good flavor.

The present invention can make further improvement as follows.

A reset spring is provided between the top pin and the inner wall of the water inlet, and the reset spring can retract the lower end of the top pin into the upper cover.

The outer wall of the base is provided with external threads, the inner wall of the upper cover is provided with internal threads, and the base is connected to the upper cover by threads.

The lower end of the top pin is conical.

A plurality of water inlets are disposed at circular intervals at the inclined surface of top needle tip.

The bottom of extraction tank is provided with an extraction bottom plate, and the extraction bottom plate is provided with a filter hole that is connected to the water outlet.

The extraction bottom plate is provided with a plurality of lamination protrusions.

The upper cover is provided with a capsule gland, the lower end of capsule gland is provided with a first sealing ring, the capsule gland is provided with a capsule compression tank, the capsule gland extends into the extraction tank at the lower end, the first sealing ring is in contact with the bottom surface of the extraction bottom plate, the lower end of top pin extends into the capsule gland, and the lamination protrusion and filtering hole are located inside the first sealing ring.

The top of the capsule gland is provided with a top needle installation channel, the top needle is disposed in the top needle installation channel, the lower end of the top needle passes downward through the top needle installation channel, and the upper end of top needle installation channel is connected to the water inlet.

The present invention has the following beneficial effects:
The hot water of present invention enters coffee capsules from a plurality of water inlets of the top needle, and extracts coffee powder from coffee capsules from multiple directions, providing good extraction effect, uniform hot water flow, rich and fatty coffee aroma, and good flavor.

### BRIEF DESCRIPTION OF THE DRAWINGS

FIG. 1 is a schematic diagram of the structure of coffee extraction component of the present invention.
FIG. 2 is a schematic diagram of the structure of coffee extraction component of the present invention from another angle.
FIG. 3 is a side view of the coffee extraction component of the present invention.
FIG. 4 is a cross-sectional view at A-A in FIG. 3.
FIG. 5 is a schematic diagram of the decomposed structure of coffee extraction component of the present invention.
FIG. 6 is a schematic diagram of the structure of top pin of the present invention.
FIG. 7 is a schematic diagram of the structure of top pin of the present invention from another angle.

### DETAILED DESCRIPTION OF THE PREFERRED EMBODIMENTS

The present invention will be further described in conjunction with the accompanying drawings and embodiments.

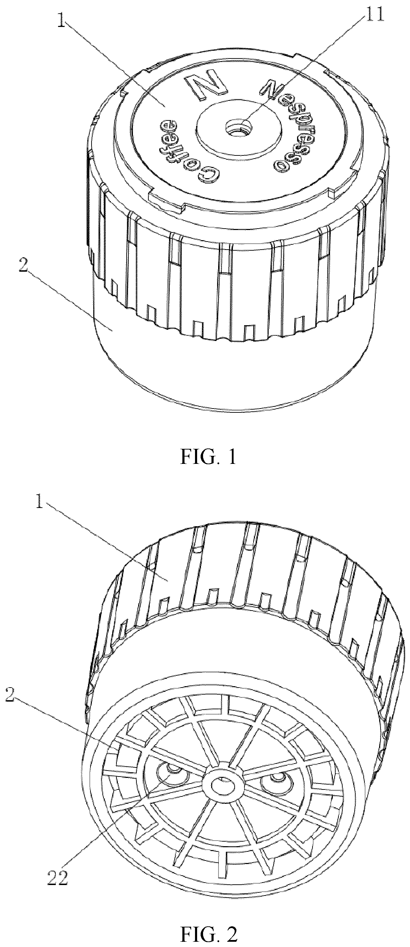

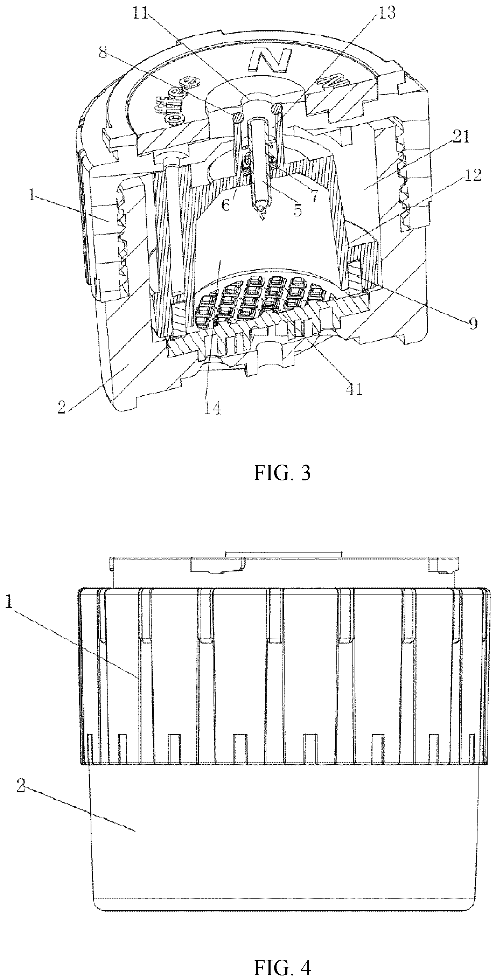

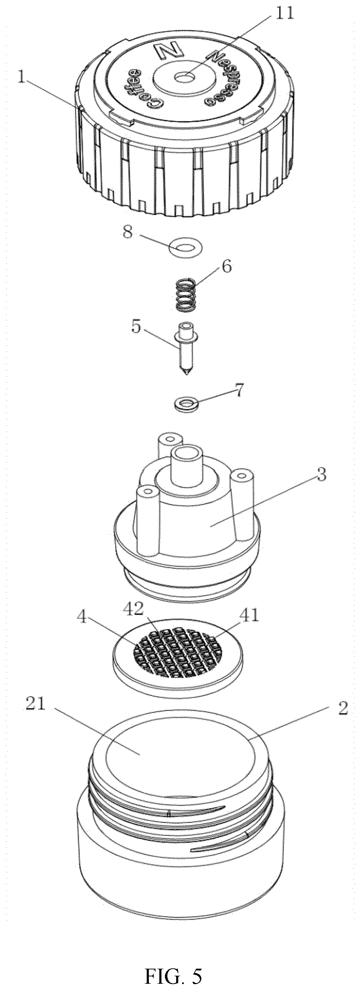

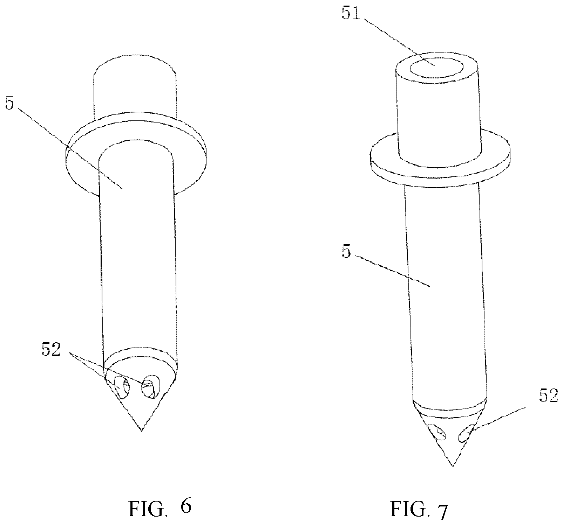

In Embodiment 1, as shown in FIG. 1 to 7, a coffee extraction component comprising a base 2 in which an extraction tank 21 is provided, and an upper cover 1 that is disposed at the top of the base 2, the base 2 bottom is provided with a water outlet 22, the upper cover 1 is provided with top needle 5 and water inlet 11, the upper end of top needle 5 is connected to the water inlet 52, the conical lower end of top needle 5 extends into the extraction tank 21, the top needle 5 slides up and down in the water inlet 11.

As a more specific technical solution of the present invention.

A reset spring 6 is provided between the top pin 5 and the inner wall of the water inlet 11.

The outer wall of the base 2 is provided with external threads, the inner wall of the upper cover 1 is provided with internal threads, and the base 2 is connected to the upper cover 1 by threads.

The lower end of the top pin 5 is conical.

A plurality of water inlets 52 are disposed at circular intervals at the inclined surface of top needle 5 tip.

The bottom of extraction tank 21 is provided with an extraction bottom plate 4, and the extraction bottom plate 4 is provided with a filter hole 42 that is connected to the water outlet 22.

The extraction bottom plate 4 is provided with a plurality of lamination protrusions 41.

The upper cover 1 is provided with a capsule gland 12, the lower end of capsule gland 12 is provided with a first sealing ring 9, the capsule gland 12 is provided with a capsule compression tank 14, the capsule gland 12 extends into the extraction tank 21 at the lower end, the first sealing ring 9 is in contact with the bottom surface of the extraction bottom plate 4, the lower end of top pin 5 extends into the capsule gland 12, and the lamination protrusion 41 and filtering hole 42 are located inside the first sealing ring 9.

The top of the capsule gland 12 is provided with a top needle installation channel (13), the top needle 5 is disposed in the top needle installation channel 13, the lower end of the top needle 5 passes downward through the top needle installation channel 13, and the upper end of top needle installation channel 13 is connected to the water inlet.

The lower end of the top pin installation channel 13 is provided with a second sealing ring 7, and the upper end of the top pin installation channel 13 is provided with a third sealing ring 8.

When using the coffee machine to brew coffee, the user first puts coffee capsules into the heating cup of coffee machine and the extraction tank of the base, then connects the cover on the base, assembles the coffee machine, coffee cup, heating cup, and coffee extraction component, the water inlet pipe of the coffee machine presses down on the top needle 5, and the reset spring 6 is compressed, the lower end of top needle 5 extends downward into the extraction tank 21, and the tip of top needle 5 pierces and extends into the coffee capsule, then the user starts the coffee machine to heat the water in the heating cup to boiling, afterwards the water in the heating cup is pumped by the water pump in the coffee machine into the top needle, and then discharged from the multiple water inlet ports 52 of the top needle; hot water flows in multiple directions towards the coffee capsule, the high-temperature steam pressure compresses the coffee capsule downwards, a plurality of pressure film protrusions 41 on the extraction bottom plate 4 break through the protective film at the bottom of coffee capsule and the hot water, after extracting the coffee powder, flows from the filter hole 42 on the extraction bottom plate 4 to the water outlet 22, and finally into the coffee cup, completing coffee extraction.

## Claims

1. A coffee extraction component, comprising a base (2) in which an extraction tank (21) is provided, and an upper cover (1) that is disposed at the top of the base (2), the base (2) bottom is provided with a water outlet (22), the upper cover (1) is provided with top needle (5) and water inlet (11), the upper end of top needle (5) is connected to the water inlet (11), the conical lower end of top needle (5) extends into the extraction tank (21), the top needle (5) slides up and down in the water inlet (11), and a plurality of water inlets (52) are disposed at circular intervals at the inclined surface of top needle (5) tip.

2. The coffee extraction component according to claim 1, wherein a reset spring (6) is provided between the top needle (5) and the inner wall of water inlet (11).

3. The coffee extraction component according to claim 1, wherein the outer wall of the base (2) is provided with external threads, the inner wall of the upper cover (1) is provided with internal threads, and the base (2) is connected to the upper cover (1) by threads.

4. The coffee extraction component according to claim 1, wherein the bottom of extraction tank (21) is provided with an extraction bottom plate (4), and the extraction bottom plate (4) is provided with a filter hole (42) that is connected to the water outlet (22).

5. The coffee extraction component according to claim 4, wherein the extraction bottom plate (4) is provided with a plurality of lamination protrusions (41).

6. The coffee extraction component according to claim 4, wherein the upper cover (1) is provided with a capsule gland (12), the lower end of capsule gland (12) is provided with a first sealing ring (9), the capsule gland (12) is provided with a capsule compression tank (14), the capsule gland (12) extends into the extraction tank (21) at the lower end, the first sealing ring (9) is in contact with the bottom surface of the extraction bottom plate (4), the lower end of top pin (5) extends into the capsule gland (12), and the lamination protrusion (41) and filtering hole (42) are located inside the first sealing ring (9).

7. The coffee extraction component according to claim 6, wherein the top of the capsule gland (12) is provided with a top needle installation channel (13), the top needle (5) is disposed in the top needle installation channel (13), the lower end of the top needle (5) passes downward through the top needle installation channel (13), and the upper end of top needle installation channel (13) is connected to the water inlet.
